# EUROPEAN PATENT APPLICATION

(11) **EP 4 836 165 A1**
(43) Date of publication of application: **04.11.2026**
(21) Application number: 24912725.9
(22) Date of filing: 23.12.2024
(51) Int. Cl.: H01M 50/503, H01G 2/02, H01G 11/10, H01M 50/505, H01M 50/509, H01M 50/55

(54) **POWER STORAGE MODULE**

(30) Priority: 28.12.2023 JP 2023222163
(71) Applicant: Panasonic Intellectual Property Management Co., Ltd., Kadoma-shi, Osaka 571-0057 (JP)
(72) Inventor: NAGATA, Keisuke, Osaka 571-0057 (JP); OGINO, Hirotaka, Osaka 571-0057 (JP)
(74) Representative: Eisenführ Speiser
(86) International application number: PCT/JP2024/045461
(87) International publication number: WO 2025/142838

(57) **Abstract**

A power storage module includes a plurality of power storage devices (10) and current collector (30). Provided is a first row including a plurality of power storage devices and a second row including a plurality of power storage devices, and the current collector connects first electrodes of the plurality of power storage devices in the first row in parallel and connects first electrodes of the plurality of power storage devices in the first row and second electrodes of the plurality of power storage devices in the second row in series. The current collector includes a base, first lead (36) extending from the base and connected to the first electrode of the power storage device in the first row, second lead (38) extending from the base and connected to the second electrode of the power storage device in the second row, a plurality of first connectors in which the plurality of first leads and the base are connected to each other, and a plurality of second connectors in which the plurality of second leads and the base are connected to each other. Of the plurality of second connectors, a pair of the first connectors is disposed between a pair of the second connectors adjacent to each other in a first direction, and the pair of first connectors is disposed to be arranged in the first direction.

## Description

### TECHNICAL FIELD

The present disclosure relates to a power storage module that accommodates a plurality of power storage devices.

### BACKGROUND ART

Conventionally, a power storage module accommodates a plurality of power storage devices, and these power storage devices are connected in parallel and in series to obtain a predetermined capacity and voltage. Examples of the power storage device include a secondary battery such as a lithium ion battery, and a capacitor.

In this power storage module, a predetermined number of power storage devices are connected in parallel, and a predetermined number of power storage device groups connected in parallel are connected in series to obtain a desired output.

PTL 1 discloses an example of such a power storage module.

### Citation List

### Patent Literature

PTL 1: PCT International Publication No. 2014-050678

### SUMMARY OF THE INVENTION

A power storage module that accommodates a large number of power storage devices is required to have further improved reliability.

A power storage module according to an aspect of the present disclosure includes a plurality of power storage devices each having a first electrode and a second electrode, and a current collector that electrically connects the plurality of power storage devices to each other, in which the plurality of power storage devices includes a first power storage device group consisting of power storage devices arranged in a first direction and a second power storage device group consisting of power storage devices arranged in the first direction, the first power storage device group and the second power storage device group are arranged in a second direction orthogonal to the first direction, the current collector connects each of a plurality of first electrodes of the power storage devices in the first power storage device group in parallel, the current collector connects each of the plurality of first electrodes of the power storage devices in the first power storage device group is connected in series to a corresponding one of a plurality of second electrodes of the power storage devices in the second power storage device group, the current collector includes a base, a plurality of first leads extending from the base and connected to the plurality of first electrodes of the power storage devices in the first power storage device group, a plurality of second leads extending from the base and connected to the plurality of second electrodes of the second power storage device group, a plurality of first connectors to which the plurality of first leads and the base are connected, and a plurality of second connectors to which the plurality of second leads and the base are connected, a pair of first connectors of the plurality of first connectors is disposed between a pair of second connectors adjacent to each other in the first direction among the plurality of second connectors, and the pair of first connectors is arranged in the first direction.

A power storage module according to another aspect of the present disclosure includes a plurality of power storage devices each having a first electrode and a second electrode, and a current collector that electrically connects the plurality of power storage devices to each other, in which the plurality of power storage devices includes a first power storage device group consisting of power storage devices arranged in a first direction and a second power storage device group consisting of power storage devices arranged in the first direction, the first power storage device group and the second power storage device group are arranged in a second direction orthogonal to the first direction, the current collector connects each of a plurality of first electrodes of the power storage devices in the first power storage device group in parallel, the current collector connects each of the plurality of first electrodes of the power storage devices in the first power storage device group in series to a corresponding one of the plurality of second electrodes of the second power storage device group, the current collector includes a base, a plurality of first leads extending from the base and connected to the plurality of first electrodes of the power storage devices in the first power storage device group, a plurality of second leads extending from the base and connected to the plurality of second electrodes of the power storage devices in the second power storage device group, a plurality of first connectors to which the plurality of first leads and the base are connected, and a plurality of second connectors to which the plurality of second leads and the base are connected, a pair of second connectors of the plurality of second connectors is disposed between a pair of first connectors adjacent to each other in the first direction among the plurality of first connectors, and the pair of second connectors is arranged in the first direction.

The power storage module of the present disclosure can improve reliability.

### BRIEF DESCRIPTION OF THE DRAWINGS

Fig. 1 is a circuit diagram showing a configuration of a power storage module.
Fig. 2 is a diagram showing an appearance of a power storage device.
Fig. 3 is a plan view showing a configuration of a current collector of a power storage module according to an exemplary embodiment.
Fig. 4 is a plan view showing a configuration of a current collector according to a comparative example.

### DESCRIPTION OF EMBODIMENT

Hereinafter, exemplary embodiments of the present disclosure will be described with reference to the drawings. Note that the following exemplary embodiments do not limit the present disclosure, and a configuration obtained by selectively combining a plurality of examples is also included in the present disclosure.

### "Overall configuration"

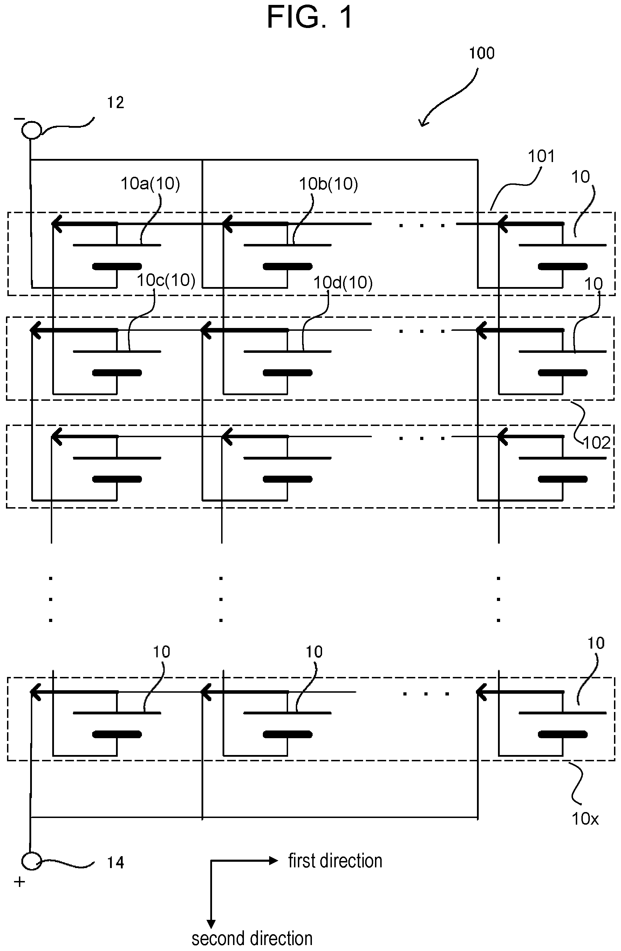

Fig. 1 is a circuit diagram showing a configuration of power storage module 100. In this example, power storage device 10 is a battery, but may be a capacitor or the like. As a battery cell, a secondary battery that is repetitively charged and discharged, such as a lithium-ion battery, can be adopted.

In power storage device group 101 (including first power storage device 10a and second power storage device 10b) in a first row arranged in a first direction in the drawing, positive electrodes are commonly connected to each other. On the other hand, negative electrodes of power storage device group 101 in the first row are commonly connected and connected to negative-electrode terminal 12 which is one output terminal of power storage module 100. In the power storage module of the present disclosure, the parallel connection is not limited to only power storage device group 101 in the first row among the plurality of power storage devices. Another row of power storage devices may also be connected in parallel with the first row.

In the present disclosure, "power storage devices 10 are arranged in the first direction" means that the power storage devices are arranged in the first direction as a whole even when the power storage devices are arranged in a zigzag manner.

A positive electrode group of first power storage device group 101 is connected to one corresponding negative electrode of second power storage device group 102 (including third power storage device 10c and fourth power storage device 10d) arranged in the first direction (along a first axis). First power storage device group 101 and second power storage device group 102 are arranged in a second direction (along a second axis) orthogonal to the first direction. In the power storage module of the present disclosure, it is not limited that only second power storage device group 102 is connected in series to first power storage device group 101. First power storage device group 101 may be connected in series with second power storage device group 102 and a power storage device group in another row.

The plurality of power storage devices 10 in each row is not required to be disposed on one straight line. The plurality of power storage devices 10 in each row may be disposed to be displaced from each other in the second direction.

In this manner, by sequentially connecting the positive electrode group of power storage devices 10 of first power storage device group 101 to the negative-electrode of power storage device 10 of second power storage device group 102 which is in the next row, the power storage device groups in each row are connected in parallel and connected in series by the number of rows.

Then, the positive electrodes of power storage device group 10x in a final row are connected in parallel and connected to output terminal 14 of the positive electrode of power storage module 100.

### "Appearance of battery"

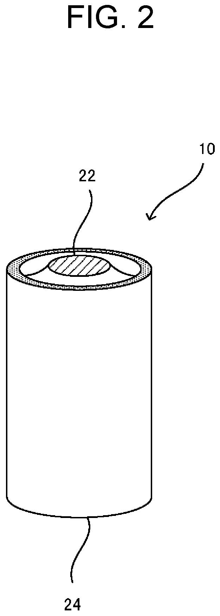

Fig. 2 is a diagram showing an appearance of one power storage device 10. Power storage device 10 is, for example, a cylindrical battery. Positive-electrode terminal 22 is disposed at a center of an upper end surface of power storage device 10. Negative-electrode terminal 24 is disposed on a lower end surface. The negative-electrode terminal may be disposed in a periphery of the upper end surface indicated by dots in Fig. 2. An example of a configuration of power storage device 10 may include an electrode assembly formed by winding a positive-electrode plate and a negative-electrode plate each having a strip shape with a separator interposed therebetween, an exterior can having a cylindrical shape with an electrolyte for the electrode assembly, a conductive sealing body that closes an opening of the exterior can, a gasket that electrically insulates the sealing body and the exterior can from each other, an internal negative-electrode lead that electrically connects the negative-electrode plate and a bottom of the exterior can in the exterior can, and an internal positive-electrode lead that electrically connects the positive-electrode plate and the sealing body to each other. The gasket covers an upper surface, a lower surface, and an outer peripheral surface connecting the upper surface and the lower surface of the sealing body, is provided on the outer peripheral surface of the exterior can, and may be sandwiched in a winding axis direction of the electrode assembly between a groove protruding on the inner peripheral surface of the exterior can and a caulking portion obtained by bending the opening of the exterior can inward to seal the inside of the exterior can. Here, the dotted region (negative-electrode terminal 24) in Fig. 2 may be the caulking portion of the exterior can. Positive-electrode terminal 22 in Fig. 2 may be a top surface of the sealing body. The configuration of the power storage device is not limited to the above configuration.

### "Configuration of current collector"

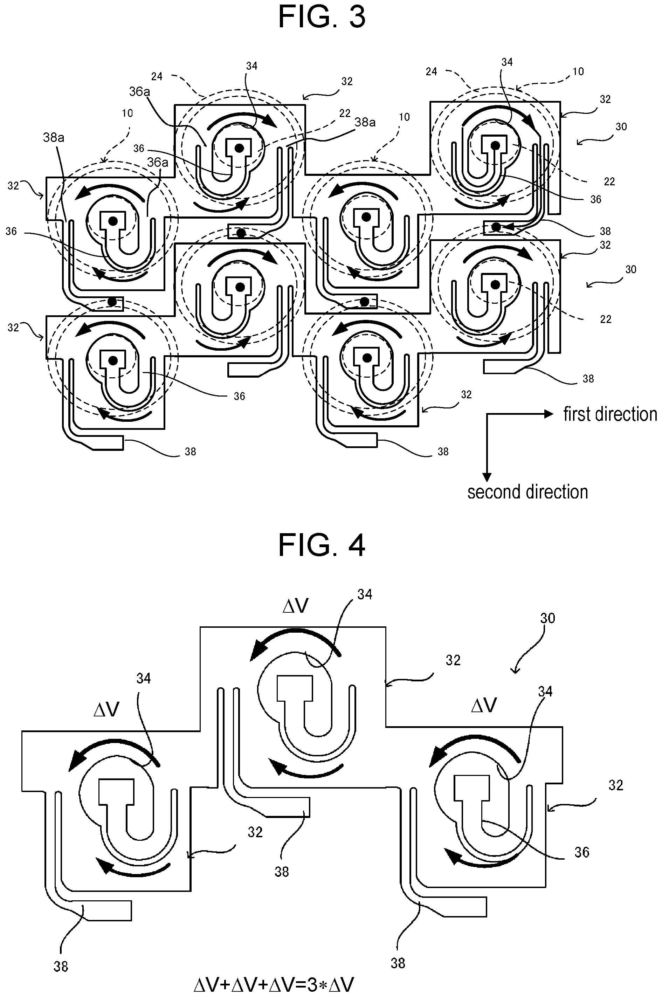

Fig. 3 is a plan view showing a configuration of current collector 30. Current collector 30 connects the positive electrodes of power storage devices 10 in the first row (first power storage device, second power storage device, fifth power storage device, and the like) in parallel, and connects the negative electrodes of power storage devices 10 in the second row (third power storage device, fourth power storage device, sixth power storage device, and the like) in parallel. That is, in Fig. 1, current collector 30 is referred to as an intermediate current collector positioned from the second row to the rows before the final row. The current collector (positive-electrode current collector) connecting the positive electrodes in the final row in parallel and the current collector (negative-electrode current collector) connecting the negative electrodes in the final row in parallel only have leads connected to one electrode of the power storage device, and are different in configuration from current collector 30 of the present disclosure.

In Fig. 3, current collector 30 connects four power storage device 10 in parallel, but the number of power storage devices 10 to which current collector 30 is connected in parallel may be any number that is two or more (plural).

Current collector 30 has a horizontally long shape corresponding to the number of power storage devices 10 to be connected, and is a plate-like member. The current collector includes a plate-like base, a plurality of first leads and a plurality of second leads, which will be described later, extending from the base. In the base, a current flows from the first lead to the second lead, and power storage devices 10 in each row are connected in parallel. Current collector 30 is preferably made of a conductive material such as copper, aluminum, iron, or nickel. Current collectors 30 are arranged in a third direction (along a third axis) orthogonal to the first direction and the second direction with respect to the plurality of power storage devices 10.

One row of power storage devices 10 is positioned in a zigzag manner, and current collector 30 also extends in a lateral direction in a zigzag manner correspondingly. The row of power storage devices 10 is not required to be in a zigzag manner. In the drawing, the planar shape of each power storage device 10 is indicated by a broken line. In the present disclosure, the power storage devices are positioned in a zigzag manner. However, since the power storage devices are arranged in one direction as a whole, the plurality of power storage devices arranged in a zigzag manner can be regarded as being arranged in one direction.

The base of current collector 30 has a shape to which quadrangular unit region 32 having a shape covering most of an upper end of one power storage device 10 is connected, but does not cover a part of negative-electrode terminal 24 positioned around corresponding power storage device 10. In the drawing, the base of current collector 30 is displaced downward in the drawing with respect to the upper end surface of corresponding power storage device 10, and an upper part of negative-electrode terminal 24 of corresponding power storage device 10 in the drawing is exposed. The base of current collector 30 may also cover the power storage device in the second row.

In unit region 32 (base) of current collector 30, substantially circular opening 34 is formed at a position corresponding to positive-electrode terminal 22 of power storage device 10. Elongated positive-electrode lead 36 extends in a U shape from an inner peripheral edge (right side) of opening 34, and a tip of positive-electrode lead 36 is connected to positive-electrode terminal 22 of power storage device 10. Here, the positive electrode is referred to as a first electrode, the negative electrode is referred to as a second electrode, positive-electrode lead 36 is referred to as a first lead, and negative-electrode lead 38 is referred to as a second lead.

In the illustrated example, the tip of positive-electrode lead 36 spreads in a quadrangular shape, and this part is connected to positive-electrode terminal 22 of power storage device 10. In Fig. 3, a node between power storage device 10 and positive-electrode lead 36 is indicated by a black circle. This connection is made, for example, by spot welding. Positive-electrode lead 36 has a U-shaped elongated shape, and the tip of positive-electrode lead 36 is preferably pressed against positive-electrode terminal 22 by elasticity.

Negative-electrode lead 38 extends in an L shape from the base downward in Fig. 3 from a position displaced in the first direction from a portion (first connector) of a root of the U-shape of positive-electrode lead 36 in the base of current collector 30. A tip of negative-electrode lead 38 has a slightly wide rectangular shape, and is connected to negative-electrode terminal 24 of power storage device 10 in the next row. In the illustrated example, negative-electrode lead 38 includes an elongated plate-like portion by a pair of slits (or only one slit) directed upward from a lower end of current collector 30 in Fig. 3, and a lateral portion (a portion bent in the first direction) below current collector 30 in Fig. 3. The tip of negative-electrode lead 38 reaches above negative-electrode terminal 24 of power storage device 10 and is connected to the portion. Negative-electrode lead 38 is also preferably pressed against the negative-electrode terminal of power storage device 10 by elasticity.

In such current collector 30, the positive electrode of power storage device 10 in the first row and the negative electrode of power storage device 10 in the second row are connected in parallel, and each power storage device 10 in the first row has the same potential.

However, in current collector 30 according to the present exemplary embodiment, the positive electrodes of power storage device 10 in the first row are connected to the negative electrodes in the second row. Power storage device 10 outputs a current from the positive electrode and receives a current from the negative electrode. Therefore, in current collector 30, a current flows from positive-electrode lead 36 toward negative-electrode lead 38. In current collector 30 according to the present exemplary embodiment, a current flows from the root (first connector 36a) of positive-electrode lead 36 toward a root (second connector 38a) of negative-electrode lead 38. That is, a current flows from the positive-electrode lead connected to first power storage device 10a, second power storage device 10b, and fifth power storage device 10e disposed in the first row to the negative-electrode lead connected to third power storage device 10c, fourth power storage device 10d, and power storage device 10 disposed in the second row (see Fig. 1). In the first direction, in the first row, the first power storage device, the second power storage device, and power storage device 10 are arranged in order from a first end to a second end in a state of being adjacent to each other, and in the second row, third power storage device 10c, fourth power storage device 10d, and the sixth power storage device are arranged in order from the first end to the second end in a state of being adjacent to each other. As a unit region, a current flows from the first power storage device to the third power storage device, a current flows from the second power storage device to the fourth power storage device, and a current flows from the fifth power storage device to the sixth power storage device. Since an electric resistance of current collector 30 is not 0, a current flows from first connector 36a to second connector 38a arranged in the first direction to generate a voltage drop. That is, due to the current flowing in the first direction, a voltage drop occurs between the root of positive-electrode lead 36 and the root of negative-electrode lead 38, and a potential difference in the first direction occurs in each unit region 32 of the base.

In the present exemplary embodiment, in adjacent unit regions 32, the positions of the root (first connector 36a) of positive-electrode lead 36 and the root (second connector 38a) of negative-electrode lead 38 are reversed with respect to an axis extending in the second direction, and the arrangement and shape in the first direction are reversed. In adjacent unit regions 32, currents in one direction and the opposite direction alternately flow. Specifically, in the first direction, the pair of adjacent first connectors is disposed to be arranged in the first direction between the adjacent second connectors. Alternatively, the pair of adjacent first connectors is disposed to be arranged in the first direction between the adjacent second connectors. In a case where there are three unit regions, in first and second unit regions adjacent to each other, when a pair of adjacent first connectors is disposed to be arranged in the first direction between the adjacent second connectors, in the second unit region and a third unit region adjacent to the second unit region, a pair of adjacent first connectors is disposed to be arranged in the first direction between the adjacent second connectors. Therefore, even if a voltage drop of ΔV occurs in one unit region 32, a voltage drop of -ΔV occurs in adjacent unit region 32, and a potential difference in the lateral direction in current collector 30 can be reduced, and potential variation between the plurality of power storage devices connected in parallel can be suppressed. In the power storage module of the present disclosure, in one current collector, the arrangement of all the first connectors and the second connectors does not need to satisfy the above requirement, and only some of the first connectors and some of the second connectors are required to satisfy the above requirement.

Fig. 4 is a diagram showing a configuration of a comparative example. In this comparative example, in all unit regions 32, the root of positive-electrode lead 36 is positioned on the right side, and the root of negative-electrode lead 38 is positioned on the left side. In such a configuration, voltage drop ΔV in the first direction in one unit region is added from one end side to the other end side of current collector 30. For example, in current collector 30 to which n unit regions are connected, a potential difference of n*ΔV is generated between one end and the other end. At this time, among the power storage devices connected in parallel, potential variation becomes large, and reliability as a power storage module can be lowered.

The present exemplary embodiment can alleviate such a potential difference. In an experiment using current collector 30 in which 10 unit regions are connected, a potential difference of about 24.7 mV is generated in the comparative example, but the potential difference can be greatly improved to about 2.9 mV in the present exemplary embodiment.

### REFERENCE MARKS IN THE DRAWINGS

10: power storage device
10a: first power storage device
10b: second power storage device
10c: third power storage device
10d: fourth power storage device
10e: fifth power storage device
10f: sixth power storage device
22: positive-electrode terminal (first electrode)
24: negative-electrode terminal (second electrode)
30: current collector
32: unit region (base)
34: opening
36: positive-electrode lead (first lead)
36a: first connector
38: negative-electrode lead (second lead)
38a: second connector
100: power storage module
101: power storage device group (first power storage device group)
102: power storage device group (second power storage device group)
103: power storage device group

## Claims

1. A power storage module comprising:
a plurality of power storage devices each having a first electrode and a second electrode; and
a current collector that electrically connects the plurality of power storage devices to each other, wherein
the plurality of power storage devices includes a first power storage device group consisting of power storage devices arranged in a first direction and a second power storage device group consisting of power storage devices arranged in the first direction,
the first power storage device group and the second power storage device group are arranged in a second direction orthogonal to the first direction,
the current collector
connects each of a plurality of first electrodes of the power storage devices in the first power storage device group in parallel, and
connects each of the plurality of first electrodes of the power storage devices in the first power storage device group in series to a corresponding one of a plurality of second electrodes of the power storage devices in the second power storage device group,
the current collector includes
a base,
a plurality of first leads extending from the base and connected to the plurality of first electrodes of the power storage devices in the first power storage device group,
a plurality of second leads extending from the base and connected to the plurality of second electrodes of the power storage devices in the second power storage device group,
a plurality of first connectors to which the plurality of first leads and the base are connected, and
a plurality of second connectors to which the plurality of second leads and the base are connected,
a pair of first connectors of the plurality of first connectors is disposed between a pair of second connectors adjacent to each other in the first direction among the plurality of second connectors, and the pair of first connectors is arranged in the first direction.

2. The power storage module according to claim 1, wherein
the first power storage device group includes a first power storage device and a second power storage device that are arranged in the first direction,
the second power storage device group includes a third power storage device and a fourth power storage device that are arranged in the first direction,
the plurality of first leads connects a first electrode of the first power storage device and a first electrode of the second power storage device in parallel,
the first electrode of the first power storage device is connected in series with a second electrode of the third power storage device,
the first electrode of the second power storage device is connected in series with the second electrode of the fourth power storage device,
the first power storage device is disposed closer to a first end of the first power storage device group than the second power storage device,
the second power storage device is disposed closer to a second end of the first power storage device group than the first power storage device,
the third power storage device is disposed closer to a first end of the second power storage device group than the fourth power storage device,
the fourth power storage device is disposed closer to a second end of the second power storage device group than the third power storage device, and
in the first direction, a first connector of a first lead connected to the first power storage device of the plurality of first leads and a first connector of a first lead connected to the second power storage device of the plurality of first leads are disposed between a second connector of a second lead connected to the third power storage device of the plurality of second leads and a second connector of a second lead connected to the fourth power storage device of the plurality of second leads.

3. The power storage module according to claim 1, wherein
the current collector has a plurality of openings through which the plurality of first electrodes of the first power storage device group are exposed, and
each of the plurality of first connectors of the plurality of first leads is formed on an inner edge of a corresponding one of the plurality of openings.

4. The power storage module according to claim 1, wherein
the current collector and the plurality of power storage devices are arranged in a third direction orthogonal to the first direction and the second direction, and
the first electrode of each of the plurality of power storage devices and the second electrode of each of the plurality of power storage devices are connected to the current collector on one end side of the power storage module in the third direction.

5. The power storage module according to claim 2, wherein
the first power storage device group further includes a fifth power storage device disposed closer to the second end of the first power storage device group than the second power storage device,
the second power storage device group further includes a sixth power storage device disposed closer to the second end of the second power storage device group than the fourth power storage device, and
in the first direction, the second connector of the second lead connected to the fourth power storage device of the plurality of second leads and the second connector of the second lead connected to the sixth power storage device of the plurality of second leads are disposed between the first connector of the first lead connected to the second power storage device of the plurality of first leads and the first connector of the first lead connected to the fifth power storage device of the plurality of first leads.

6. The power storage module according to claim 1, wherein
a pair of first leads, among the plurality of first leads and connected to the pair of first connectors, each has a portion extending opposite to the other in the first direction.

7. The power storage module according to claim 1, wherein
a pair of second leads, among the plurality of second leads and connected to the pair of second connectors, each has a portion extending opposite to the other in the first direction.

8. A power storage module comprising:
a plurality of power storage devices each having a first electrode and a second electrode; and
a current collector that electrically connects the plurality of power storage devices to each other, wherein
the plurality of power storage devices includes a first power storage device group consisting of power storage devices arranged in a first direction and a second power storage device group consisting of power storage devices arranged in the first direction,
the first power storage device group and the second power storage device group are arranged in a second direction orthogonal to the first direction,
the current collector
connects each of a plurality of first electrodes of the power storage devices in the first power storage device group in parallel, and
connects each of the plurality of first electrodes of the power storage devices in the first power storage device group in series to a corresponding one of the plurality of second electrodes of the second power storage device group,
the current collector includes
a base,
a plurality of first leads extending from the base and connected to the plurality of first electrodes of the power storage devices in the first power storage device group,
a plurality of second leads extending from the base and connected to the plurality of second electrodes of the power storage devices in the second power storage device group,
a plurality of first connectors to which the plurality of first leads and the base are connected, and
a plurality of second connectors to which the plurality of second leads and the base are connected,
a pair of second connectors of the plurality of second connectors is disposed between a pair of first connectors adjacent to each other in the first direction among the plurality of first connectors, and the pair of second connectors is arranged in the first direction.

9. The power storage module according to claim 8, wherein
the current collector has a plurality of openings through which the plurality of first electrodes of the first power storage device group are exposed, and
each of the plurality of first connectors of the plurality of first leads is formed on an inner edge of a corresponding one of the plurality of openings.

10. The power storage module according to claim 8, wherein
the current collector and the plurality of power storage devices are arranged in a third direction orthogonal to the first direction and the second direction, and
the first electrode of each of the plurality of power storage devices and the second electrode of each of the plurality of power storage devices are connected to the current collector on one end side of the power storage module in the third direction.

11. The power storage module according to claim 8, wherein
a pair of first leads, among the plurality of first leads and connected to the pair of first connectors, each has a portion extending opposite to the other in the first direction.

12. The power storage module according to claim 8, wherein
a pair of second leads, among the plurality of second leads and connected to the pair of second connectors, each has a portion extending opposite to the other in the first direction.
